# EUROPEAN PATENT APPLICATION

(11) **EP 3 416 160 A1**
(43) Date of publication of application: **19.12.2018**
(21) Application number: 17176179.4
(22) Date of filing: 15.06.2017
(51) Int. Cl.: G10K 11/168, E04B 1/86, E04F 13/18, E04F 13/08, E04B 1/80

(54) **IMPROVED SOUND-ABSORBING PANEL**

(71) Applicant: TONUCCI S.N.C. DI TONUCCI ANDREA, GIACOMO & C., 61122 Pesaro (PS) (IT)
(72) Inventor: TONUCCI, Giacomo, 61122 PESARO (IT)
(74) Representative: Baldi, Claudio

(57) **Abstract**

A sound-absorbing panel (100) comprises a sound-absorbing body (1) comprising at least one side (11, 12), a perimeter edge (13) and a protection layer (2) applied on said at least one side (11, 12) and/or on said perimeter edge (13) of the body (1) to reinforce said body (1); the protection layer (2) is made of paint and comprises synthetic resins dispersed in water.

## Description

The present patent application for industrial invention relates to a sound-absorbing panel. The primary purpose of said panels is acoustic insulation of settings or sound-proofing intended as reduction of sound waves and/or control of reflections and/or control of reverberation time and/or acoustic correction of settings.

As it is known, sound-absorbing panels are made of a material that is capable of absorbing sound energy. The capability of absorbing sound waves is expressed with an acoustic absorption coefficient. The acoustic absorption coefficient of a sound-absorbing panel is the absorption level of the sound energy that hits a panel.

Materials with a high absorption coefficient of the sound waves are known. However, said materials are impaired by the fact that they are easily broken and/or deformed. In particular, materials with a high absorption coefficient of sound waves suffer from oxidation. Oxidation is a process that is generated in foam materials when they are exposed to irradiation by means of either direct or indirect sunlight. Such a process results in a gradual aging and breaking of sound-absorbing panels.

For this reason, the sound-absorbing panels made of these materials are able to reduce the propagation of sound waves but, at the same time, are subject to tearing and breaking because of the intrinsic fragility of said materials. Moreover, sound-absorbing panels suffer from decay due to the oxidation of the material used to manufacture them.

Materials with a higher resistance to breaking and/or deformation are known on the market, although they have a lower acoustic absorption coefficient.

Consequently, the sound-absorbing panels that are made with these materials have a higher resistance to tearing and breaking and are less subject to the oxidation process, but at the same time they have a lower absorption of the sound waves compared to the panels that are made with materials with a high acoustic absorption coefficient.

US2004/265567 describes a method for making a coating layer adapted to be applied to acoustic panels. This method provides for applying the coating layer on a perfectly flat and planar panel surface. Therefore, this acoustic panel has an impact surface with the sound waves that is closely dependent on the panel size. As a result, a small sized acoustic panel has a small impact surface with the sound waves, with a consequently reduced absorption of sound waves.

EP0408428 describes a thermal and acoustic panel used in the construction of ventilated facades. This panel consists of a mineral-fibre felt having an outer surface comprising a porous coating based on a polymerised substance which is UV-stable, impervious to water and permeable to gases and to vapours. The outer surface of the panel is perfectly flat and planar. Therefore, also this panel has an impact surface with the sound waves that is closely dependent on the panel size.

The purpose of the present invention is to remedy the drawbacks of the prior art, by providing a sound-absorbing panel that is strong, resistant and efficient at the same time.

An additional purpose is to disclose a sound-absorbing panel that is reliable and inexpensive.

The sound-absorbing panel of the invention comprises:
- a sound-absorbing body provided with at least one side and one perimeter edge;
- a protection layer applied on said at least one side and/or on said perimeter edge of the body to reinforce said body. The protection layer is made of paint and comprises synthetic resins dispersed in water.

The peculiarity of the sound-absorbing panel consists in the fact that said at least one side and/or said perimeter edge of the body comprises depressions.

The advantages of the sound-absorbing panel according to the invention are apparent. The presence of said depressions on said at least one side and/or on said perimeter edge of the body allows to increase the surface of said at least one side and/or of said perimeter edge of the body of the sound-absorbing panel.

By increasing the surface of said at least one side and/or of said perimeter edge of the body, the impact surface with the sound waves is increased. Consequently, the absorption of the sound waves is increased.

Moreover, because of the presence of the depressions and of the consequent increase of the surface of said at least one side and/or of said perimeter edge of the body, it is possible to increase the sound-absorption power of the sound-absorbing panel and at the same time characterize the sound-absorbing panel in terms of aesthetics, making bas-relief patterns on one or more sides of the body of the sound-absorbing panel to increase the aesthetic value of the sound-absorbing panel.

For the sake of clarity, the description of the sound-absorbing panel according to the invention continues with reference to the attached drawings, which have a merely illustrative, not limiting value, wherein:
Fig. 1 is an axonometric view of the sound-absorbing panel according to the invention,
Fig. 2 is a sectional view of the sound-absorbing panel of Fig. 1 along plane II-II;
Fig. 3 is an exploded view of the sound-absorbing panel of Fig. 1;
Fig. 4 is an axonometric view of an anchoring bracket of the sound-absorbing panel according to the invention.

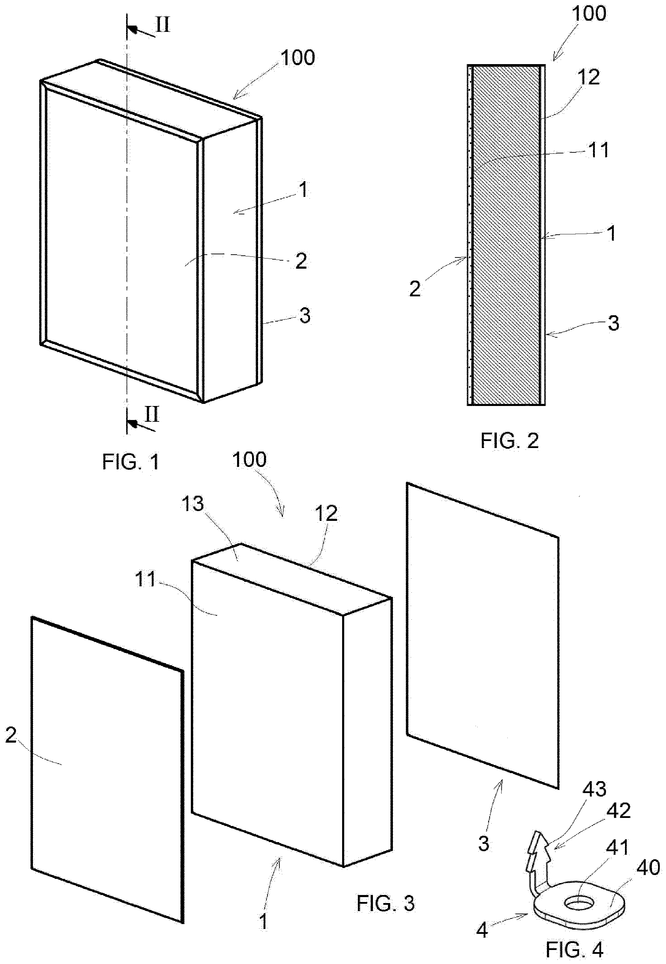

With reference to Fig. 1, a sound-absorbing panel according to the invention is disclosed, which is generally indicated with reference numeral (100).

The sound-absorbing panel (100) comprises a sound-absorbing body (1) with a parallelepiped shape.

The body (1) comprises a perimeter edge (13), a back side (12) intended to be interfaced with a wall and a front side (11) that is parallel to the back side (12) and is intended to remain visible.

The body (1) has a thickness comprised between 8 mm and 52 mm and is made of foamed melamine.

In particular, a melamine foam is used, which is a melamine-based open-cell foam, which is heat and flame-resistant. Because of the open-cell structure, the melamine foam has a high sound wave absorption coefficient, as explained in detail below, indicating the parameters that were measured during the sound-absorption tests of the panel of the invention.

The density of the melamine foam is approximately 9.5 ± 1.5 kg/m3 and some experimental tests have shown that:
- the tensile strength of the melamine foam is higher than 120 kPa;
- the elongation strength before failure is 10%;
- the strength to a compression equal to 10% of the thickness is comprised between 5 kPa and 20 kPa;
- the permanent deformation following to a deformation equal to 50% of the thickness at a temperature of 70°C for 22 hours is comprised between 5% and 30%;
- the permanent deformation following to a deformation equal to 50% of the thickness at a temperature of 20°C for 72 hours is comprised between 10% and 35%;
- the thermal conductivity at 10°C is lower than 0.035 W/m*K;
- the limit temperature of use is equal to approximately 150°C.

The sound-absorbing panel (1) comprises a protection layer (2) applied on at least one side (11, 12) and/or on the perimeter edge (13) of the body (1) to reinforce the body (1).

In particular, as shown in Fig. 2, the protection layer (2) is applied on the front side (11) of the body to protect and reinforce the front side (11) of the body.

The protection layer (2) is made of paint and comprises synthetic resins dispersed in water with cork elastic and thermal inert material that allow to maintain an open-cell structure of the front side (11) of the body, in such a way to cause a practically imperceptible reduction of the sound-absorption coefficient of the body (1).

Sound-absorption tests of the panel with the protection layer (2) and without the protection layer (2) were carried out to assess the incidence of the protection layer in terms of absorption coefficient (αs).

| Hz | αs (Panel without protection layer) | αs (Panel with protection layer) |
|---|---|---|
| 125 | 0.13 | 0.11 |
| 250 | 0.43 | 0.42 |
| 500 | 0.92 | 0.92 |
| 1K | 0.82 | 0.82 |
| 2K | 0.74 | 0.72 |
| 4K | 0.78 | 0.78 |

The table shows that the incidence in terms of sound-absorption of the protection layer (2) of the panel (100) is substantially negligible.

Because of the application of the protection layer (2) with synthetic resins dispersed in water, the sound-absorbing panel (100) is resistant to tearing, breaking and abrasions and is not subject to the oxidation process.

Moreover, the protection layer (2) comprises self-extinguishing pyrogen-free charges to prevent flame propagation.

Although not shown in the attached figures, the protection layer (2) might be also applied on the perimeter border (13) and on the back side (12) to protect also the perimeter edge (13) and the back side (12) of the body.

The application of the protection layer (2) also on the perimeter edge (13) and on the back side (12) of the body is especially useful when the sound-absorbing panel is not mounted in contact with the wall. In fact, in such a case, also the back side and the perimeter edge are exposed to breaking and deformation.

As shown in Fig. 3, advantageously, the sound-absorbing panel (100) comprises a polypropylene alveolar panel (3) disposed on one of said sides (11, 12) of the sound-absorbing panel. Advantageously, said polypropylene alveolar panel (3) is disposed on the back side (12) of the sound-absorbing panel (100).

Said polypropylene alveolar panel (3) has a thickness that is advantageously comprised between 2 mm and 8 mm and is provided with good shock resistance properties and high stability to thermal changes and weather agents.

In particular, the provision of said polypropylene alveolar panel (3) gives a high rigidity to the sound-absorbing panel (100) of the invention, preventing the risk of deforming the sound-absorbing panel (100) in case of critical climatic conditions.

With reference to Fig. 4, the sound-absorbing panel (100) comprises fixing means (4) to fix the sound-absorbing panel (100) to a wall.

Said fixing means (4) comprise anchoring brackets, each of them comprising a main body (40) and a serrated portion (42) connected to the central portion. The main body (40) of each anchoring bracket is provided with a hole (41) intended to be crossed by a screw in order to fix the anchoring bracket to the wall. The serrated portion (42) of each anchoring bracket is inserted into the polypropylene alveolar panel (3) applied on the back side (12) of the sound-absorbing panel (100). In particular, said serrated portion (42) comprises hook-shaped teeth (43) that are configured in such a way to hold in the polypropylene alveolar panel (3), fixing the sound-absorbing panel (100) to the anchoring bracket.

The front side (11) of the body (1) is milled in such a way to produce depressions in order to increase the surface of the front side of the body.

By increasing the surface of the front side (11) of the body (1), the impact area with the sound waves is increased. Consequently, the absorption of the sound waves is increased.

Moreover, because of the presence of the depressions and of the consequent increase of the surface of the front side (11) of the body, it is possible to increase the sound-absorption power of the sound-absorbing panel (100) and at the same time characterize the sound-absorbing panel in terms of aesthetics, making bas-relief patterns on the front side of the body to increase the aesthetic value of the sound-absorbing panel.

Advantageously, also the back side (12) and/or the perimeter edge (13) of the body can be milled in such a way to increase the sound wave absorption and improve the aesthetics of the sound-absorbing panel.

The milling of the back side (12) and/or of the perimeter edge (13) of the sound-absorbing panel is especially useful when the sound-absorbing panel is not in contact with the wall. In such a case, also the back side and the perimeter edge are visible and exposed to sound waves.

The manufacturing method of a sound-absorbing panel (100) provides for providing the body (1) of the sound-absorbing panel and milling the perimeter edge (13) and/or at least one side (11, 12) of the body (1), preferably the front side (11), in such a way to increase the surface of the side (11, 12) and/or of the perimeter edge (13) of the body.

Successively, the manufacturing method of a sound-absorbing panel (100) provides for applying a protection layer (2) on the perimeter edge (13) and/or on at least one side (11, 12) of the body (1), preferably on the front side (11). The protection layer (2) is applied with a spraying gun, an airless system or a roller. Preferably, said application is repeated at least twice. In particular, an initial coating is obtained by applying the paint on the sound-absorbing panel (1) by means of a series of overlapped crossed coats of paint. Preferably, the coats of paint have an angle of 45°. Successively, a finishing coating is obtained by applying the paint on the sound-absorbing panel (1) in the same way as the initial coating. About 30 minutes must elapse between the initial coating and the finishing coating.

Optionally, before applying the protection layer (2) on the body, coloring agents can be applied to the protection layer in order to improve the aesthetics of the sound-absorbing panel (100) according to the user requirements.

Successively, the protection layer (2) needs to dry for at least 24 hours at a temperature comprised between 20°C and 70°C.

Then, optionally, the manufacturing method of the sound-absorbing panel (100) provides for applying a polypropylene alveolar panel (3) on at least one side (11, 12) of the body (1), preferably on the back side (12), and fixing the sound-absorbing panel (100) to a wall and/or a ceiling with the anchoring brackets.

The fixing of the sound-absorbing panel (100) to the wall by means of the anchoring brackets comprises:
- the pressure insertion of a serrated portion (42) of the anchoring bracket inside the polypropylene alveolar panel (3) of the sound-absorbing panel (100) in such a way to fix the sound-absorbing panel (100) to the anchoring bracket;
- the insertion of a screw into a hole (41) of the main body (40) of the anchoring bracket;
- the tightening of said screw in a hole of the wall, in such a way to fix the anchoring bracket to the wall.

## Claims

1. Sound-absorbing panel (100) comprising:
- a sound-absorbing body (1) comprising at least one side (11, 12) and a perimeter edge (13),
- a protection layer (2) applied on said at least one side (11, 12) and/or on said perimeter edge (13) of the body (1) to reinforce said body (1); the protection layer (2) being made of paint and comprising synthetic resins dispersed in water with cork elastic and thermal inert material;
**characterized in that** said at least one side (11, 12) and/or said perimeter edge (13) of the body (1) comprises depressions.

2. The sound-absorbing panel (100) of claim 1, wherein the body is made of melamine.

3. The sound-absorbing panel (100) of claim 1 or 2, wherein said protection layer (2) comprises self-extinguishing pyrogen-free charges to prevent flame propagation.

4. The sound-absorbing panel (100) of any one of the preceding claims, comprising a polypropylene alveolar panel (3) disposed on said at least one side (11, 12) of the sound-absorbing panel.

5. The sound-absorbing panel (100) of any one of the preceding claims, wherein said sound-absorbing panel (100) comprises fixing means (4) to fix the sound-absorbing panel (100) to a wall.

6. The sound-absorbing panel (100) of claim 5, when depending on claim 4, wherein said fixing means (4) comprise anchoring brackets, each anchoring bracket comprising:
- a main body (40) provided with a hole (41) intended to be crossed by a screw to fix the anchoring bracket to the wall;
- a serrated portion (42) connected to said main body (40) and inserted into the polypropylene alveolar panel (3) applied on said at least one side (11, 12) of the sound-absorbing panel (100), said serrated portion (42) comprising hook-shaped teeth (43) configured in such a way to hold in the polypropylene alveolar panel (3), in such a way to fix the sound-absorbing panel (100) to the anchoring bracket.

7. Manufacturing method of a sound-absorbing panel (100) that provides for:
- providing a body (1) of said sound-absorbing panel;
- milling said at least one side (11, 12) of the body and/or said perimeter edge (13) of the body in such a way to create depressions on said side (11, 12) and/or on said perimeter edge (13) of the body;
- applying a protection layer (2) on said at least one side (11, 12) of the body (1) and on a perimeter edge (13) of the body (1) with a spraying gun, an airless system or a roller.

8. The manufacturing method of a sound-absorbing panel (100) according to claim 7, which provides for a step after the step of applying the protection layer (2) on one side (11, 12) and on the perimeter edge (13) of the body (1) of the sound-absorbing panel said step providing for drying the protection layer (2) for at least 24 hours at a temperature comprised between 20°C and 70°C.

9. The manufacturing method of a sound-absorbing panel (100) according to claim 7 or 8, wherein the step of applying a protection layer (2) on at least one side (11, 12) and on the perimeter edge (13) of the body (1) must be repeated at least twice.

10. The manufacturing method of a sound-absorbing panel (100) according to claim 8, which provides for the following steps, after the step of drying the protection layer (2):
- applying a polypropylene alveolar panel (3) on said at least one side (11, 12) of the sound-absorbing panel;
- fixing said sound-absorbing panel (100) to a wall with fixing means (4) comprising anchoring brackets.

11. The manufacturing method of a sound-absorbing panel (100) according to claim 10, wherein said step of fixing the sound-absorbing panel (100) to the wall comprises:
- the pressure insertion of a serrated portion (42) of the anchoring bracket inside the polypropylene alveolar panel (3) of the sound-absorbing panel (100) in such a way to fix the sound-absorbing panel (100) to the anchoring bracket;
- the insertion of a screw into a hole (41) of a main body (40) of the anchoring bracket;
- the tightening of said screw in a hole of the wall, in such a way to fix the anchoring bracket to the wall.
